# DEMANDE DE BREVET EUROPEEN

(11) **EP 0 645 934 A1**
(43) Date de publication de la demande: **29.03.1995**
(21) Numéro de dépôt: 94202721.0
(22) Date de dépôt: 22.09.1994
(51) Int. Cl.: H04N 9/64

(54) **Téléviseur muni d'un dispositif de sélection de différentes sources**

(30) Priorité: 29.09.1993 FR 9311610
(71) Demandeur: PHILIPS ELECTRONIQUE GRAND PUBLIC, 92150 Suresnes (FR); PHILIPS ELECTRONICS N.V., 5621 BA Eindhoven (NL)
(72) Inventeur: Vilard, Philippe, F-75008 Paris (FR)
(74) Mandataire: Caron, Jean

(57) **Abrégé**

Pour permettre la connexion de signaux composites ou de signaux "Y-C", selon les moments, sur l'entrée d'un même circuit, dans le cas où ce circuit (18) est de type à entrée "Y-C" (deux bornes séparées), un filtre (16) éliminant le signal de chrominance est inséré dans l'entrée "Y" et un filtre (17) éliminant le signal de luminance est inséré dans l'entrée "C", cependant que dans le cas où ce circuit (11) est de type à entrée composite, son entrée est reliée à une source de signal de type "Y" (14) par un pont de deux résistances (13, 21) en série, et le point intermédiaire de ce pont est relié à une source de signal type "C" (19) par un circuit résonnant (9, 10) inductance-capacité de type série qui est accordé sur la fréquence de la sous-porteuse de chrominance.

Applications : téléviseurs offrant un choix parmi plusieurs sources d'images de type différents.

## Description

La présente invention concerne un téléviseur muni de moyens de sélection d'une pluralité de signaux de télévision disponibles à partir de différentes sources, dont certains sont des signaux dit composites, qui sont constitués du mélange d'un signal de luminance et d'un signal de chrominance, ce dernier porté par une sous-porteuse, alors que d'autres sont des signaux dits "Y-C", se présentant sous forme d'un signal de luminance et d'un signal de chrominance séparés, cependant qu'au moins un des circuits du téléviseur devant recevoir un de ces signaux est conçu pour exploiter des signaux se présentant sous forme d'un signal de luminance et d'un signal de chrominance séparés.

Lorsqu'on utilise des entrées de deux types, on ne sait pas à priori à quel type de signal on a affaire à un instant donné. Le document US-4,660,073 (Baumeister) enseigne d'utiliser un détecteur qui détecte la composante de chrominance reçue pour déterminer quand le signal est du type Y-C et le traiter en conséquence, le seul circuit devant recevoir les signaux étant du type traitant séparément la luminance et la chrominance, et les signaux composites étant systématiquement convertis en signaux Y-C avant d'être appliqués au dit circuit.

Néanmoins il peut arriver qu'au moins un autre des circuits du téléviseur soit conçu pour exploiter un signal composite. Il serait alors maladroit de convertir les signaux composites, alors qu'ils conviennent pour être appliqués directement à cet autre circuit. Pour permettre de sélectionner n'importe laquelle des sources de signal disponibles et de l'utiliser quel que soit le type du circuit auquel on l'applique, les moyens de sélection comportent selon l'invention un dispositif de commutation muni
- d'une pluralité d'entrées, à savoir au moins une entrée comportant une borne d'entrée "Y" et une borne d'entrée "C" pour des signaux "Y-C", et au moins une entrée ne comportant qu'une borne pour un signal composite,
- de commutateurs pour sélectionner une des entrées,
- et de deux sorties séparées, dont l'une est dite sortie "Y" et l'autre est dite sortie "C",
les dits commutateurs étant agencés pour, lorsqu'une une entrée du type "Y-C" doit être sélectionnée, relier la borne d'entrée "Y" de cette entrée de type "Y-C" à la sortie "Y" du dispositif de commutation et relier la borne d'entrée "C" de cette entrée de type "Y-C" à la sortie "C" du dispositif de commutation, et pour, lorsqu'une une entrée du type composite doit être sélectionnée, la relier simultanément aux deux sorties "Y" et "C".
Le circuit conçu pour travailler à partir de signaux "Y-C" est muni à cet effet d'une entrée "C" et d'une entrée "Y". Avantageusement, chacune des entrées "Y" ou "C" de ce circuit étant connectée à la sortie correspondante du dispositif de commutation, respectivement "Y" ou "C", un filtre éliminant le signal de chrominance est inséré dans l'entrée "Y" du circuit et un filtre éliminant le signal de luminance est inséré dans l'entrée "C" du circuit.
Ceci permet que le circuit fonctionne aussi lorsqu'il est relié à une source de type composite, au lieu d'une source de type "Y-C" pour laquelle il est conçu.
L'entrée du circuit conçu pour travailler à partir d'un signal composite est avantageusement reliée à la fois à la sortie "Y" du dispositif de commutation par un filtre réjecteur de la fréquence de la sous-porteuse de chrominance, et à la sortie "C" du dispositif de commutation par un filtre passe-bande centré sur la fréquence de la sous-porteuse de chrominance.
Ceci permet d'obtenir sans commutation que le niveau de signal ne soit pas doublé, par rapport au cas d'une source de type "Y-C", lorsque le circuit est relié à une source de type composite.
Afin de réaliser de la façon la plus économique le filtre réjecteur et le filtre passe-bande ensemble, les sources reliées aux entrées du dispositif de commutation étant des sources à basse impédance de sortie, et l'entrée du circuit étant à haute impédance, elle est reliée à la sortie "Y" du dispositif de commutation par un pont de deux résistances en série, et le point intermédiaire de ce pont est relié à la sortie "C" du dispositif de commutation par un circuit résonnant inductance-capacité de type série qui est accordé sur la fréquence de la sous-porteuse de chrominance.

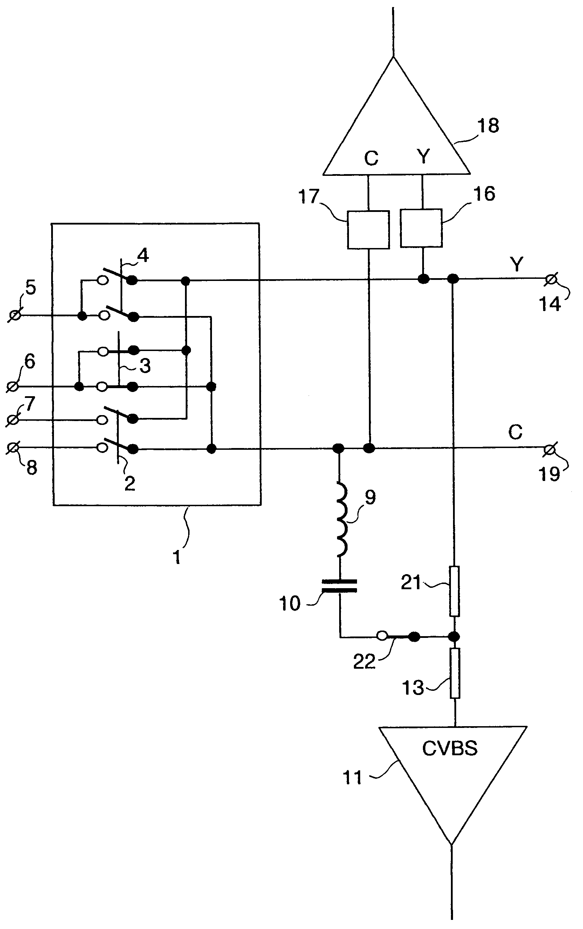

Ces aspects de l'invention ainsi que d'autres aspects plus détaillés apparaîtront plus clairement grâce à la description suivante d'un mode de réalisation non limitatif.
La figure unique est un schéma des parties d'un téléviseur concernées par l'invention.

Un signal de type composite, dit aussi "CVBS" (Composite Video Basic Signal), comprend un ensemble de deux signaux mélangés : un signal de luminance dit "Y" et un signal de chrominance dit "C", le signal "Y" étant en bande de base, et le signal "C" porté par une sous-porteuse, par exemple à 4,434 MHz dans le cas d'un standard PAL.
Les informations de luminance et de chrominance séparées, appelées habituellement "Y-C", comprennent un signal de luminance dit "Y" et un signal de chrominance dit "C", identiques respectivement à ceux d'un signal composite, mais séparés l'un de l'autre.
Dans un téléviseur, des informations de type composite sont disponibles par exemple en sortie du propre démodulateur SECAM ou PAL du téléviseur et aussi à partir de prises dites "SCART" ou "de péritélévision". Par contre des signaux du type "Y-C" sont disponibles sur une prise destinée à la liaison avec un magnétoscope de type S-VHS ou Hi-8, ou bien en sortie d'un démodulateur de type "D2-MAC/PAQUETS".
Par ailleurs, un circuit intégré destiné à introduire une "image dans l'image" possède une entrée de type composite pour recevoir l'image à introduire, alors que le circuit vidéo principal fournissant l'image principale du téléviseur est conçu pour exploiter des signaux "Y-C". On est donc confronté à quatre cas :
Premier cas : celui où le circuit conçu pour travailler à partir d'un signal composite reçoit des signaux "Y-C".
Second cas : celui où le circuit conçu pour travailler à partir d'un signal composite reçoit justement un signal de ce type.
Troisième cas : celui où le circuit conçu pour travailler à partir de signaux "Y-C" reçoit justement un signal de ce type.
Quatrième cas : celui où le circuit conçu pour travailler à partir de signaux "Y-C" reçoit un signal composite.
Pour permettre de sélectionner n'importe laquelle des sources de signal disponibles, le dispositif de commutation 1 de la figure unique est muni
- de deux sorties 14 et 19, la sortie 14 appelée "Y" en principe destinée à porter un signal de luminance, la sortie 19 appelée "C" en principe destinée à porter un signal de chrominance,
- de deux entrées 5 et 6, chacune pour un signal composite,
- d'une entrée 7,8 comprenant d'une part une borne d'entrée 7 pour un signal de luminance et d'autre part une borne d'entrée 8 pour un signal de chrominance.
- de trois commutateurs doubles 2, 3, 4.
Il est clair que le nombre respectif d'entrées de chaque type pourrait être différent.
Lorsque les contacts du commutateur 2 sont fermés, l'entrée de luminance 7 est reliée à la sortie de luminance 14, et l'entrée de chrominance 8 est reliée à la sortie de chrominance 19. Ainsi lorsque l'entrée sélectionnée est du type présentant des informations de luminance et de chrominance séparées, les commutateurs amènent les informations de luminance à la sortie correspondante et celles de chrominance à l'autre sortie.
Lorsque les contacts du commutateur 3 sont fermés, comme représenté sur la figure, l'entrée composite 6 est reliée à la fois à la sortie 14 et à la sortie 19. De même, lorsque les contacts du commutateur 4 sont fermés, l'entrée composite 5 est reliée à la fois à la sortie 14 et à la sortie 19. Ainsi lorsque l'entrée sélectionnée est du type composite, les commutateurs la relient simultanément aux deux sorties.

Lorsqu'on connecte un circuit à la sortie du dispositif de commutation, on ne sait pas à priori à quel type d'entrée il va être relié.

Si l'on utilise un circuit 18 conçu pour travailler à partir d'informations de luminance et de chrominance séparées, il serait normal de relier son entrée "C" à la sortie "C" du dispositif de commutation, et son entrée "Y" à la sortie "Y" du dispositif. Mais pour le quatrième cas ci-dessus, où c'est une entrée de type composite qui est sélectionnée, un filtre 16 éliminant la composante "C" est inséré dans l'entrée "Y" et un filtre 17 éliminant la composante "Y" est inséré dans l'entrée "C". Néanmoins aucune commutation n'est nécessaire pour adapter le circuit selon les cas, les filtres 16 et 17 pouvant être installés en permanence, étant donné qu'ils ne nuisent pas au fonctionnement dans le troisième cas, où ils se contentent de ne servir à rien.

Si on utilise un circuit 11 conçu pour travailler à partir d'un signal composite, et qu'on est dans le premier cas ci-dessus où c'est une entrée avec des informations de luminance et de chrominance séparées qui est sélectionnée, il serait normal de relier son entrée au dispositif via un circuit additionneur, par exemple un pont de résistances, pour faire la somme des signaux sur la sortie "Y" et sur la sortie "C" du dispositif de commutation 1. Un tel montage peut fonctionner du fait que dans des signaux "Y-C" le signal C est identique au signal de chrominance d'un signal composite, la seule différence étant qu'il est porté par un conducteur distinct.
Mais alors se pose un problème concernant le niveau du signal, si cet additionneur reste en place dans le second cas. En effet, en additionnant un signal "Y" de niveau unité et un signal "C" de niveau unité dans le premier cas on obtient un signal composite de niveau unité. Par contre en additionnant un signal composite de niveau unité au même signal composite de niveau unité dans le second cas on obtient un signal composite de niveau double.

Il faudrait donc installer une commutation pour adapter le circuit selon qu'on est dans le premier cas ou dans le second cas. Cette sujétion est évitée parce que, les sources reliées aux entrées 5-8 du dispositif de commutation étant des sources à basse impédance de sortie, alors que l'entrée du circuit 11 est à haute impédance, la dite entrée du circuit 11 est reliée à la sortie "Y" (14) du dispositif 1 par un pont de deux résistances 21, 13 en série, et le point intermédiaire de ce pont de résistances est relié à la sortie "C" (19) du dispositif ci-dessus par un circuit L-C série, constitué d'une self-inductance 9 et d'une capacité 10, ce circuit L-C étant accordé sur la fréquence de la sous-porteuse de chrominance.

Ainsi dans le premier cas la composante "C" peut traverser le circuit L-C série comme si de rien n'était, et la composante "Y" n'est pas atténuée non plus, mais dans le second cas la composante "Y" du signal composite arrivant par la sortie "C" du dispositif est arrêtée par le circuit L-C série cependant que la composante "C" du même signal composite arrivant par la sortie "Y" du dispositif est court-circuitée par ce même circuit L-C série. Ainsi le niveau à l'entrée du circuit utilisé est le même que dans le premier cas.
Un tel système de filtrage fonctionne de façon satisfaisante avec des résistances 21 et 13 valant par exemple 220 ohms, la capacité 10 étant de 130 pF et la self-inductance 9 de 10 µH.
Bien que, pour simplifier la figure, deux circuits 11 et 18 soient représentés connectés au même dispositif de commutation 1, il est clair qu'en général chaque circuit possède son propre dispositif de commutation.

Une situation particulière peut se présenter, lorsqu'on utilise une même prise de péritélévision pour deux usages, et qu'elle peut recevoir de façon imprévisible, selon l'appareil qu'un usager y connecte, l'un ou l'autre des deux types de signal. Alors on ne peut pas classer l'entrée parmi les "composite" ou les "Y-C". Lorsque par exemple la prise de péritélévision est du type normalisé en Europe dite "SCART", étendu à l'usage d'un signal S-VHS ou Hi-8, un signal composite habituel peut être appliqué à sa broche n°20, mais un signal S-VHS peut aussi être disponible, dont la partie de luminance est alors appliquée à la broche n°20 et la partie de chrominance par exemple à la broche n°15 (prévue normalement pour l'entrée d'une composante "rouge"), cependant qu'un signal est appliqué aussi à la broche n°12 dite "d'intercommunication" de la prise de péritélévision pour signaler la situation. Alors la broche n°20 de la prise de péritélévision en question doit être reliée à la borne 7 (c'est-à-dire à la sortie 14 quand le commutateur 2 est fermé) et la broche n°15 de la prise de péritélévision à la borne 8 (c'est-à-dire à la sortie 19 quand le commutateur 2 est fermé). Alors, dans le cas d'un signal composite, celui-ci n'est présent que sur la borne 14 et pas sur la borne 19, et la composante de chrominance de ce signal composite présente sur la borne 14 est court-circuitée par le système de filtrage 9, 10, 21. Pour ce cas particulier, un interrupteur 22 est prévu, qui est ouvert seulement dans le cas "Y-C" qui est signalé par un signal appliqué à la broche n°12. Un circuit connu détecte la présence d'un tel signal afin de commander l'interrupteur 22 sans intervention de l'usager.

## Revendications

1. Téléviseur muni de moyens de sélection d'une pluralité de signaux de télévision disponibles à partir de différentes sources, dont certains sont des signaux dit composites, qui sont constitués du mélange d'un signal de luminance et d'un signal de chrominance, ce dernier porté par une sous-porteuse, alors que d'autres sont des signaux dits "Y-C", se présentant sous forme d'un signal de luminance et d'un signal de chrominance séparés, cependant qu'au moins un des circuits du téléviseur devant recevoir un de ces signaux est conçu pour exploiter des signaux se présentant sous forme d'un signal de luminance et d'un signal de chrominance séparés, caractérisé en ce que, au moins un autre des circuits (11) du téléviseur étant conçu pour exploiter un signal composite, les moyens de sélection (1) comportent un dispositif de commutation muni
- d'une pluralité d'entrées, à savoir au moins une entrée comportant une borne d'entrée "Y" (7) et une borne d'entrée "C" (8) pour des signaux "Y-C", et au moins une entrée (5) ne comportant qu'une borne pour un signal composite,
- de commutateurs (2, 3, 4) pour sélectionner une des entrées,
- et de deux sorties séparées, dont l'une (14) est dite sortie "Y" et l'autre (19) est dite sortie "C",
les dits commutateurs étant agencés pour, lorsqu'une une entrée du type "Y-C" doit être sélectionnée, relier la borne d'entrée "Y" (7) de cette entrée de type "Y-C" à la sortie "Y" (14) du dispositif de commutation et relier la borne d'entrée "C" (7) de cette entrée de type "Y-C" à la sortie "C" (19) du dispositif de commutation, et pour, lorsqu'une une entrée du type composite (5) doit être sélectionnée, la relier simultanément aux deux sorties "Y" et "C" (14+19).

2. Téléviseur selon la revendication 1, dans lequel le circuit (18) conçu pour travailler à partir de signaux "Y-C" est muni à cet effet d'une entrée "C" et d'une entrée "Y", caractérisé en ce que, chacune des entrées "Y" ou "C" de ce circuit étant connectée à la sortie correspondante (14, 19) du dispositif de commutation, respectivement "Y" ou "C", un filtre (16) éliminant le signal de chrominance est inséré dans l'entrée "Y" du circuit et un filtre (17) éliminant le signal de luminance est inséré dans l'entrée "C" du circuit (18).

3. Téléviseur selon l'une des revendications 1 ou 2, caractérisé en ce que l'entrée du circuit (11) conçu pour travailler à partir d'un signal composite est reliée à la fois à la sortie "Y" (14) du dispositif de commutation par un filtre réjecteur de la fréquence de la sous-porteuse de chrominance (21, 13, 10, 9), et à la sortie "C" du dispositif de commutation par un filtre passe-bande (10, 9) centré sur la fréquence de la sous-porteuse de chrominance.

4. Téléviseur selon la revendication 3 caractérisé en ce que, les sources reliées aux entrées du dispositif de commutation (1) étant des sources à basse impédance de sortie, et l'entrée du circuit (11) étant à haute impédance, elle est reliée à la sortie "Y" du dispositif de commutation par un pont de deux résistances en série (21+13), et le point intermédiaire de ce pont est relié à la sortie "C" du dispositif de commutation par un circuit résonnant inductance-capacité de type série (10, 9) qui est accordé sur la fréquence de la sous-porteuse de chrominance.

5. Téléviseur selon la revendication 4, dans lequel une même prise de péritélévision peut recevoir indifféremment, selon l'appareil qu'un usager y connecte, l'un ou l'autre des deux types de signaux, tantôt un signal de type composite qui est appliqué à la broche de la prise de péritélévision affectée normalement à l'entrée d'un signal composite, tantôt des signaux "Y-C" dont le signal de luminance est appliqué aussi à la dite broche affectée normalement à l'entrée d'un signal composite cependant que le signal de chrominance est appliqué à une autre broche de la prise de péritélévision et qu'un signal de commande est alors appliqué à une broche d'intercommunication de la prise de péritélévision pour signaler la situation, caractérisé en ce que la dite broche qui est affectée normalement à l'entrée d'un signal composite est reliée à une borne "Y" d'une entrée de type "Y-C" du dispositif de commutation (1), la dite autre broche est reliée à la borne "C" de cette entrée, et en ce qu'un interrupteur (22) est prévu en série avec le susdit circuit résonnant inductance-capacité (9, 10) ainsi que des moyens pour ouvrir cet interrupteur seulement dans le cas où le dit signal de commande est présent sur la broche d'intercommunication.
